Europäisches Patentamt

European Patent Office

Office européen des brevets

(19)

(11) **EP 0 940 566 A2**

(12) **EUROPÄISCHE PATENTANMELDUNG**

(43) Veröffentlichungstag:
**08.09.1999 Patentblatt 1999/36**

(51) Int. Cl.$^6$: **F01P 7/16**, F01P 5/10

(21) Anmeldenummer: **99102206.2**

(22) Anmeldetag: **04.02.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **04.03.1998 DE 19809124**

(71) Anmelder: **DaimlerChrysler AG
70567 Stuttgart (DE)**

(72) Erfinder: **Lehmann, Kai
14974 Ludwigsfelde (DE)**

(54) **Steuervorrichtung für den Kühl- und Heizungskreislauf einer Brennkraftmaschine**

(57)    Eine Steuervorrichtung für den Kühl- und Heizungskreislauf einer Brennkraftmaschine ist mit einem Kühler, mit einer Förderpumpe und mit einem Wärmetauscher für den Heizungskreislauf mit folgenden Merkmalen versehen: In einem Ventilgehäuse ist ein Drehschieber angeordnet. Der Drehschieber weist wenigstens annähernd eine Hülsenform auf. Der Drehschieber ist mit einer axialen Sammelöffnung zur Zufuhr oder Abfuhr von Kühlmedium zur Saug- oder Druckseite der Förderpumpe versehen. In der Umfangswand des Ventilgehäuses sind Zulauf- oder Auslauföffnungen für eine Kurzschlußkreislaufleitung des Kühlwassers, für eine mit dem Kühler verbundene Kühlerleitung und für eine zu dem Wärmetauscher des Heizungskreislaufes führende Heizungsleitung vorgesehen. Der Drehschieber weist in seiner Umfangswand eine Steueröffnung mit einer Öffnungsweite auf, durch die eine Verbindung von der Sammelöffnung zu einer einzelnen Zulauf- oder Auslauföffnung oder für einen Mischbetrieb eine überlappende Verbindung zu zwei benachbart zueinander liegende Zulauf- oder Auslauföffnungen geschaffen wird.

Fig. 1

**Beschreibung**

Die Erfindung betrifft eine Steuervorrichtung für den Kühl- und Heizungskreislauf einer Brennkraftmaschine.

Zur Steuerung des Kühl- und Heizungskreislaufes einer Brennkraftmaschine sind aus der Praxis Thermostate bekannt, die temperaturabhängig in der Aufwärmphase der Brennkraftmaschine einen Kurzschlußkreislauf schalten. Ebenso sind Taktventile bekannt, die im Heizungskreislauf die Kühlmittelströme schalten. Schieber- und Drehventile mit Schrittmotorenantrieb sind zur Steuerung des Kühl- und Heizungskreislaufes ebenfalls aus der Praxis bekannt.

Aus der DE 43 24 749 A1 ist ein Regelventil für den Kühlkreislauf bekannt, mit einem radialen Zulauf und drei radialen Abgängen, wobei die Verteilung des Kühlmittels durch einen Drehschieber erfolgt.

Nachteilig bei diesem Regelventil ist jedoch, daß man stets resultierende Kräfte auf den Drehschieber hat, die zu Verklemmungen führen können und/oder entsprechend starke Antriebsmotoren zu dessen Verstellung erforderlich machen. Darüber hinaus sind die Verstell- bzw. Mischstellungen beschränkt.

Aus der DE 41 25 366 C1 ist ein 3/2-Wegeventil für Flüssigkeitskreisläufe in Fahrzeugen bekannt, mit einem axialen Zulauf und zwei radialen Abführungen. Auch bei diesem Ventil sind die Einstellmöglichkeiten beschränkt, so daß zur Steuerung bzw. Regelung eines Kühl- und Heizungskreislaufes noch weitere Einrichtungen erforderlich sind.

Der vorliegenden Erfindung liegt die Aufgabe zugrunde, eine Steuervorrichtung zu schaffen, in der mehrere Funktionen von Stell- und Schaltelementen derart integriert sind, daß im Bedarfsfalle weitere Regelglieder in einem Kühl- und Heizungskreislauf eines Kraftfahrzeuges entfallen können.

Erfindungsgemäß wird diese Aufgabe durch die in Anspruch 1 genannten Merkmale gelöst.

Mit der erfindungsgemäßen Steuervorrichtung kann mit einem einzigen Gerät der gesamte Kreislauf zur Kühlung und zur Heizung für nahezu alle in der Praxis vorkommenden Fälle geregelt werden. Es sind sowohl einzelne Öffnungen ansteuerbar als auch Mischbetriebe möglich, so daß auf weitere Steuer- und Regelglieder im Kühl- und Heizungskreislauf verzichtet werden kann.

Ein weiterer Vorteil der erfindungsgemäßen Lösung liegt darin, daß aufgrund der axialen Zuführung oder Abführung und den Zulauf- oder Auslauföffnungen am Umfang des Ventilgehäuses keine resultierenden Kräfte auf den Drehschieber wirken, womit man mit geringen Stell- und Haltekräften für den Drehschieber auskommt.

Durch die erfindungsgemäße Anordnung sind neben den Einzelströmungen alle in der Praxis auftretenden Mischstufen realisierbar. Darüber hinaus treten bei der erfindungsgemäßen Stellvorrichtung nur geringe Druckverluste auf, bei gleichzeitig hohen Stellgeschwindigkeiten.

Legt man die Zulauf- oder Auslauföffnungen in eine gleiche Radialebene, so wird zusätzlich noch eine sehr kompakte Bauweise erreicht.

Die erfindungsgemäße Steuervorrichtung läßt sich in zwei Richtungen betreiben, nämlich mit einem axialen Zulauf und entsprechenden Abgängen bzw. Auslauföffnungen am Umfang, wobei die Sammelöffnung mit der Druckseite einer Förderpumpe verbunden ist oder auch umgekehrt, wobei die Sammelöffnung mit der Saugseite einer Förderpumpe verbunden ist und über die Umfangswand des Drehschiebers entsprechend die Zuläufe vom Kühler und von weiteren Teilkreisläufen erfolgen.

In den Unteransprüchen und in dem nachfolgend anhand der Zeichnung prinzipmäßig beschriebenen Ausführungsbeispiel sind vorteilhafte Weiterbildungen und Ausgestaltungen der Erfindung aufgezeigt.

Es zeigt:

Fig. 1  eine perspektivische Darstellung der erfindungsgemäßen Steuervorrichtung;

Fig. 2  einen schematischen Querschnitt durch die erfindungsgemäße Steuervorrichtung;

Fig. 3-6  verschiedene Steuerstellungen der Steuervorrichtung;

Fig. 7  die Anordnung der erfindungsgemäßen Steuervorrichtung in einem Kühl- und Heizungskreislauf; und

Fig. 8  eine zweite Anordnungsmöglichkeit der erfindungsgemäßen Steuervorrichtung in dem Kühl- und Heizungskreislauf.

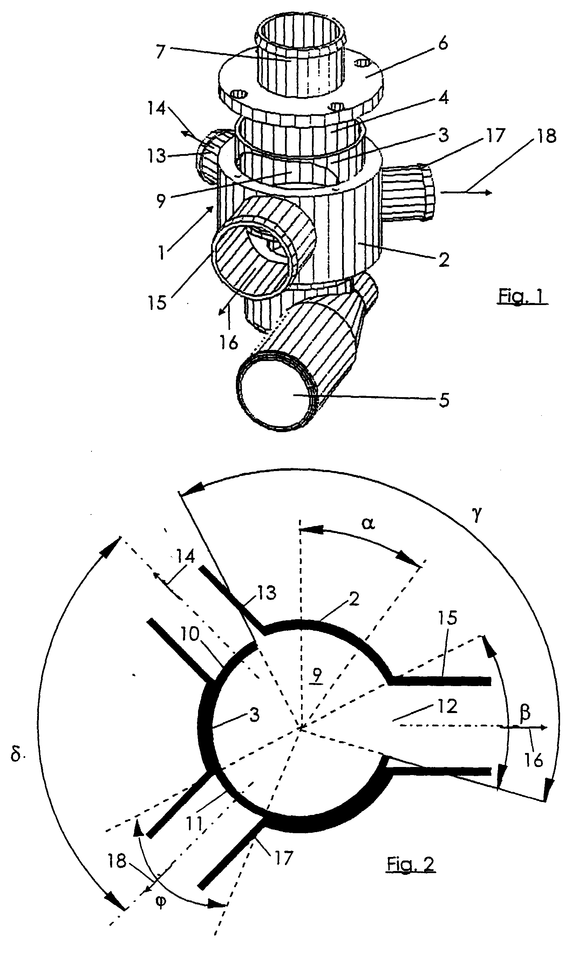

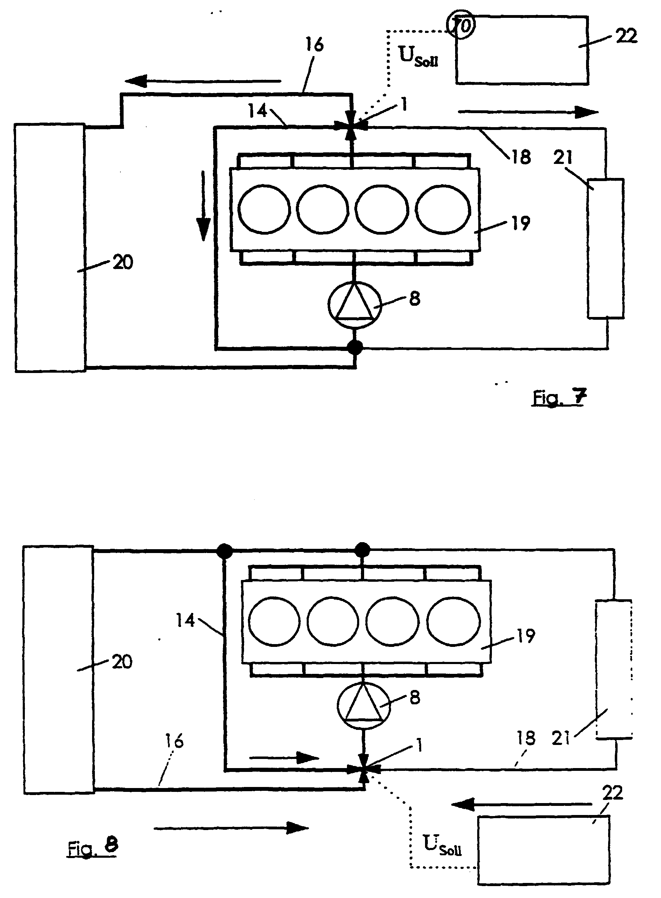

Gemäß Fig. 1 weist die Steuervorrichtung 1 ein zylinderförmiges Ventilgehäuse 2 auf, in welchem ein hülsenförmiger Drehschieber 3 gelagert ist. Der Drehschieber 3 ist mit einer axialen Sammelöffnung 4 auf einer Stirnseite versehen, während er auf der anderen Seite geschlossen und mit einer Antriebseinrichtung 5 zu dessen Verschwenkung um seine Längsachse versehen ist. Das Ventilgehäuse 2 ist auf der von der Antriebseinrichtung 5 abgewandten Seite mit einem Deckel 6 mit einem zentralen Flansch 7 versehen, über den eine Verbindung mit einer in den Fig. 7 und 8 dargestellten Pumpe 8 zu der Sammelöffnung 4 erfolgt.

Der Drehschieber 3 ist in seiner Umfangswand mit einer Steueröffnung 9 versehen. Je nach Strömungsrichtung wird Kühlmedium von der Sammelöffnung 4 aus über die Steueröffnung 9 in Zulauf- oder Auslauföffnungen in dem Ventilgehäuse 2 verteilt oder von den Zulauf- oder Auslauföffnungen zu der Sammelöffnung 4 geführt. Bei dem in der Fig. 1 dargestellten Ausführungsbeispiel erfolgt der Zulauf des Kühlmediums axial über die Sammelöffnung 4 und wird von dort aus durch die Steueröffnung 9 über eine Auslauföffnung 10, 11 oder 12 weitergeleitet. Die Auslauföffnung 10 ist mit einem Anschlußstutzen 13 versehen, über den eine Verbindung zu einer Kurzschlußkreislaufleitung 14 erfolgt. Die Auslauföffnung 12 ist über einen Anschlußstutzen 15 mit einer Kühlleitung 16 verbunden, während die Auslauföffnung 11 über einen Anschlußstutzen 17 mit einer Heizungsleitung 18 verbunden ist.

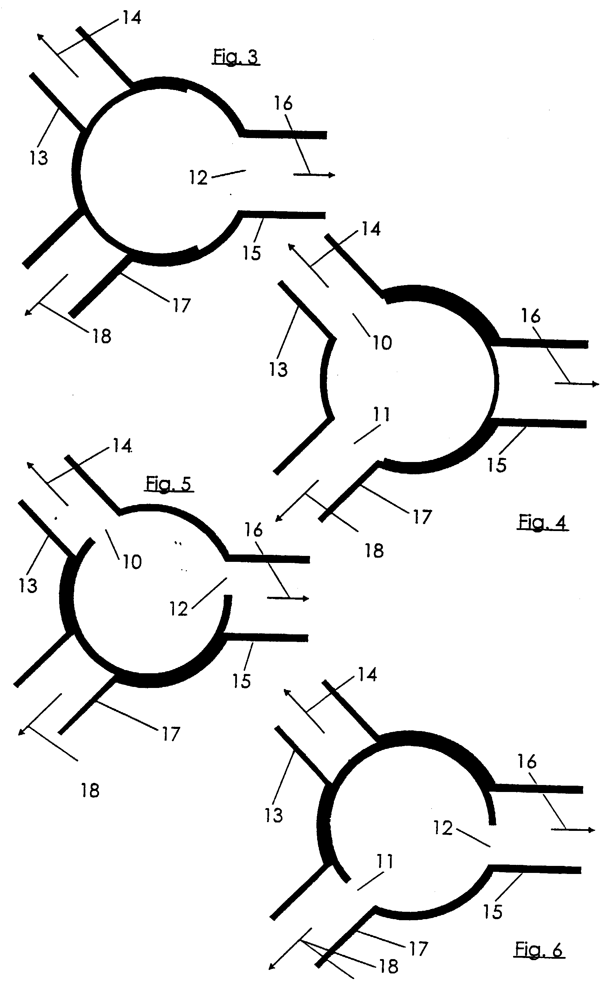

Wie aus der Fig. 2 und den verschiedenen Betriebsstellungen in den Fig. 3 bis 6 deutlicher ersichtlich ist, besitzt die Sammelöffnung 9 in der Umfangswand des Drehschiebers 4 eine derartige Öffnungsweite, daß sowohl Einzelströmungen von der Sammelöffnung 4 aus zu einer der Auslauföffnungen 10, 11 oder 12 als auch überlappende Verbindungen für Mischbetriebe möglich sind.

Gemäß Fig. 2 müssen hierzu folgende Bedingungen erfüllt sein:

$$\delta < \gamma - (\frac{\varphi n}{2} + \frac{\varphi m}{2})$$

Dabei bedeuten:

| | |
|---|---|
| $\gamma$ | Öffnungswinkel des Drehschiebers |
| $\delta$ | Winkel zwischen den Stutzen |
| $\varphi$ | Winkelöffnung der Anschlußstutzen |
| $\beta$ | freigeschalteter Öffnungswinkel des entsprechenden Stutzens |

$\delta_1 + \delta_2 + \delta_3 = 360°$, wobei die einzelnen Winkel möglichst gleich gewählt werden sollten $\beta_{max} = \varphi$ Vollöffnung des Querschnittes

In Fig. 2 sind die Winkel mittels Schnittdarstellung durch die Mittenebene der Anschlußquerschnitte dargestellt. Alle Winkel stehen in einem unmittelbaren Zusammenhang mit den Querschnittsfunktionen. Neben der relativ einfachen Form einer Bohrung für die Öffnungen können auch andere, nicht kreisrunde Querschnitte gewählt werden. Auf diese Weise kann man einen weiteren Freiheitsgrad bei der Festlegung des Stellverhaltens erreichen.

Bei dem dargestellten Ausführungsbeispiel gehen die Anschlußstutzen 13, 15 und 17 radial von dem Ventilgehäuse 3 ab. Um eine strömungsgünstigere Form zu erreichen, ist es auch möglich die Anschlußstutzen halbaxial bzw. gegen die Radiale geneigt an das Ventilgehäuse 2 anzusetzen. Ebenso könnte das Ventilgehäuse selbst statt einer Zylinderform eine Kegelform aufweisen, wobei dann der Drehschieber 3 in seiner Form ebenfalls entsprechend an die Kegelform anzupassen wäre.

In den Fig. 3 bis 6 sind verschiedene Steuerstellungen der Steuervorrichtung 1 dargestellt. So zeigt Fig. 3 die Stellung im Normalbetrieb „Kühlen". In der Fig. 4 ist ein erster Mischbetrieb in der Warmlaufphase des Motores bei gleichzeitigem Heizbetrieb dargestellt. Fig. 5 zeigt einen Zweiten Mischbetrieb in der Phase „Warmlaufen" und „Kühlen".

Die Fig. 6 zeigt einen dritten Mischbetrieb in der Phase „Heizen und Kühlen".

Entsprechend dem in der Fig. 3 dargestellten Betrieb sind auch im Bedarfsfalle noch andere einzelne Verbindungen von der Steueröffnung 9 zu einer einzelnen Auslauföffnung möglich.

Anstelle des Heizungskreislaufes kann auch ein zweiter Kurzschlußkreis, z.B. für den Zylinderkopf, vorgesehen sein.

Ebenso kann anstelle des Heizungskreislaufes und/oder der Kurzschlußkreislaufleitung 14 ein anderer oder zwei andere Teilkreisläufe vorgesehen sein. So ist es z.B. möglich, einen Teilkreislauf für eine Zusatzheizung und/oder einen weiteren Teilkreislauf für eine Abgaswärmetauschereinrichtung vorzusehen.

Wie ersichtlich, kann der Drehschieber 3 jeden Kreislauf separat schalten. Zusätzlich können zwischen jeweils zwei Kreislaufen jegliche Mischstufen eingestellt werden.

An der Steuervorrichtung 1 liegen keine resultierenden Strömungskräfte vor, die ein Moment um die Drehachse des Drehschiebers 3 erzeugen würden. Dies bedeutet Veränderungen der Drehschieberstellung infolge einer Durchströmung sind nicht möglich, weshalb die Antriebsleistung für die Antriebseinrichtung 5 entsprechend gering gehalten werden kann. Durch die geringen Stellkräfte ist im Normalfall auch keine besondere Lagerung des Drehschiebers 3 erforderlich. Da in jeder Winkelstellung Querschnitte in radialer Richtung freigeschaltet sind, treten außerdem auch nur sehr geringe Druckabfälle über der Steuervorrichtung auf, womit besondere Aodichtungen der einzelnen Zu- und Abläufe entfallen können.

Bei dem dargestellten Ausführungsbeispiel liegen alle Auslauföffnungen 10, 11 und 12 in der gleichen Radialebene, womit eine sehr kurze Baulänge erreicht wird.

Die Lage der in den Fig. 1 bis 6 dargestellten Steuervorrichtung 1 mit einem axialen Zulauf von der Pumpe 8 und den drei radialen Auslauföffnungen 10, 11 und 12 in dem Kühl- und Heizungskreislauf einer Brennkraftmaschine 19 ist in der Fig. 7 dargestellt. In diesem Falle ist der Flansch 7 mit der Druckseite der Pumpe 8 verbunden. Die Pfeile neben der Kurzschlußkreislaufleitung 14, neben der Kühlerleitung 16, die zu einem Kühler 20 und von da aus wieder Zur Pumpe 8 zurückführt, und neben der Heizungskreislaufleitung 18, in der ein Wärmetauscher 21 angeordnet ist, von welchem eine Rückleitung zur Pumpe 8 erfolgt, zeigen die jeweilige Strömungsrichtung des Kühlmediums. Über eine nicht näher dargestellte Steuerungselektronik 22 erfolgt mit $U_{Soll}$ eine Ansteuerung der Antriebseinrichtung 5 für den Drehschieber 3.

Bei der in der Fig. 7 dargestellten Lage der Steuervorrichtung verteilt der Drehschieber 3 entsprechend seiner Stellung die einzelnen Teilvolumenströme.

Gemäß Lage der Steuervorrichtung nach der Fig. 8 vereint diese bzw. der Drehschieber 3 entsprechend seiner Stellung die einzelnen Teilvolumenströme. Wie ersichtlich, ist dabei der Flansch 7 saugseitig bzw. eingangsseitig mit der Pumpe 8 verbunden. Die Pfeile neben der Kurzschlußkreislaufleitung 14, der Kühlerleitung 16 und der Heizungsleitung 18 zeigen wiederum die Strömungsrichtung des Kühlmediums an, wobei in diesem Falle die Öffnungen in dem Ventilgehäuse keine Auslauföffnungen, sondern Zulauföffnungen 10, 11 und 12 darstellen. Die Sanmelöffnung 9 dient damit zur Zuleitung des Kühlmediums zur Saugseite der Förderpumpe 8. Die Wirkungsweise der Steuervorrichtung entspricht auch bei dieser Lage der Steuervorrichtung 1 der Wirkungsweise gemäß Lage nach der Fig. 7.

**Patentansprüche**

1. Steuervorrichtung für den Kühl- und Heizungskreislauf einer Brennkraftmaschine mit einem Kühler, mit einer Förderpumpe und mit einem weiteren Teilkreislauf, insbesondere mit einem Wärmetauscher für den Heizungskreislauf mit folgenden Merkmalen:

   1.1 In einem Ventilgehäuse (2) ist ein Drehschieber (3) angeordnet,
   1.2 der Drehschieber (3) weist wenigstens annähernd eine Hülsenform auf,
   1.3 der Drehschieber (3) ist mit einer axialen Sammelöffnung (4) zur Zufuhr oder Abfuhr von Kühlmedium zur Saug- oder Druckseite der Förderpumpe (8) versehen,
   1.4 in der Umfangswand des Ventilgehäuses (2) sind Zulauf- oder Auslauföffnungen (10,11,12) für eine mit dem Kühler (20) verbundene Kühlerleitung (16) und für wenigstens zwei weitere Teilkreisläufe (14,18) vorgesehen,
   1.5 der Drehschieber (3) weist in seiner Umfangswand eine Steueröffnung (9) mit einer Öffnungsweite auf, durch die eine Verbindung von der Sammelöffnung (4) zu einer einzelnen Zulauf- oder Auslauföffnung (10,11,12) oder für einen Mischbetrieb eine überlappende Verbindung zu zwei benachbart zueinander liegende Zulauf- oder Auslauföffnungen (10,11,12) geschaffen wird.

2. Steuervorrichtung nach Anspruch 1,
   **dadurch gekennzeichnet,** daß
   die weiteren Teilkreisläufe für eine Kurzschlußkreislaufleitung (14) des Kühlwassers und für eine zu dem Wärmetauscher (21) des Heizungskreislaufes führende Heizungsleitung (18) vorgesehen sind.

3. Steuervorrichtung nach Anspruch 1,
   **dadurch gekennzeichnet,** daß
   eine oder beide weiteren Teilkreisläufe für eine Zusatzheizung und/oder eine Abgaswärmetauschereinrichtung vorgesehen sind.

4. Steuervorrichtung nach einem der Ansprüche 1 bis 3,
   **dadurch gekennzeichnet,** daß
   die Zulauf- oder Auslauföffnungen (10,11,12) in einer gleichen Radialebene liegen.

5. Steuervorrichtung nach Anspruch 4,
   **dadurch gekennzeichnet,** daß
   die Winkelabstände zwischen den Zulauf- oder Auslauföffnungen (10,11,12) gleichmäßig über den Umfang des Ventilgehäuses (2) verteilt sind.

6. Steuervorrichtung nach einem der Ansprüche 1 bis 5,
   **dadurch gekennzeichnet,** daß
   von den Zulauf- oder Auslauföffnungen (10,11,12) Anschlußstutzen (13,15,17) halbaxial abzweigen.

7. Steuervorrichtung nach einem der Ansprüche 1 bis 6,
   **dadurch gekennzeichnet,** daß
   der Drehschieber (3) auf der von der axialen Sammelöffnung (4) abgewandten Seite mit einer Antriebseinrichtung (5) in Verbindung steht.

Fig. 1

Fig. 2

Fig. 3

Fig. 4

Fig. 5

Fig. 6

Fig. 7

Fig. 8